# EUROPEAN PATENT SPECIFICATION

(11) **EP 0 865 734 B1**
(45) Date of publication and mention of the grant of the patent: **31.01.2001**
(21) Application number: 97940163.5
(22) Date of filing: 11.09.1997
(51) Int. Cl.: A23B 4/09, A23B 4/16, A23L 3/3409, A23L 3/3418, A23L 3/3445

(54) **PROCESS FOR THE PRESERVATION OF FRESH FISH ON BOARD FISHING VESSELS, BASED ON THE APPLICATION OF A VARIABLE COMPOSITION ATMOSPHERE, AND SYSTEM FOR IMPLEMENTING SUCH PROCESS**
VERFAHREN ZUR KONSERVIERUNG VON FRISCHEM FISCH AN BORD, UNTER ANWENDUNG VON VARIABLER ATMOSPHEREZUSAMMENSETZUNG, UND SYSTEM ZUR DURCHFÜHRUNG EINES SOLCHEN VERFAHRENS
PROCEDE DE CONSERVATION DU POISSON FRAIS A BORD DE BATEAUX DE PECHE, FONDE SUR L'APPLICATION D'UNE ATMOSPHERE DE COMPOSITION VARIABLE, ET SYSTEME POUR SA REALISATION

(30) Priority: 11.09.1996 ES 9601930
(43) Date of publication of application: 23.09.1998
(73) Proprietor: Innaves, S.A., Pontevedra, 36210 Vigo (ES)
(72) Inventor: GOMEZ GIRALDEZ, Francisco José, 36208 VIGO (Pontevedra) (ES)
(74) Representative: Urizar Anasagasti, José Antonio
(86) International application number: ES9700224
(87) International publication number: WO9810660

(56) References cited:
- EP-A- 0 346 201
- EP-A- 0 457 431
- WO-A-95/00030
- US-A- 3 851 080
- US-A- 3 930 040

## Description

The object of the present invention relates, as the title indicates, to a process for the conservation of fresh fish, on board of fishing vessels, based on the application of a variable composition atmosphere and to the system for the implementation of said process, to be installed on any type of fishing vessel, peferably on those vessels staying at sea for long periods, which present important advantages with respect to existing means used for that purpose.

Till now, the use of gases such as carbon dioxide (CO₂), or some inert gases, etc., for the conservation of fresh food has been widely known. Thus, there exists a known method based on the application of a given amount of carbon dioxide (CO₂), inhibiting the grow of certain germs, for the conservation of said food products. For example, european patent application 0346201 describes a gas mixture of carbon dioxide, oxygen and argon for fish and sea-food products preservation, which slows down enzymatic reactions of said products. Also, there are other known methods for the conservation of the organoleptic properties of said products, comprising the application of an inert gas or a combination of several gases containing at least an inert gas in a proportion higher than that of said inert gas in the open atmosphere. Thus, the US patent application 3930040A proposed fresh meat storage or shipment in a modified gaseous atmosphere of carbon dioxide, molecular oxygen, carbon monoxide, being nitrogen the remaining gas mixture component.

Now there exist different processes for the conservation of fresh fish based on the injection of a given composition of gases inside the chambers that contain the fresh fish, without modifying such composition. One of the prior art references is US patent 3,851,080, which stated the desirability of providing a controlled gaseous atmosphere (carbon dioxide, molecular oxygen and the remainder, esentially molecular nitrogen). However, with this type of processes, a problem arises in that the composition injected reacts with the fresh fish contained within the chambers, producing changes in said gas, what cause a worsening in the conservation conditions, thus affecting the organoleptic properties of the fresh product.

Furthermore, and with the purpose of preventing the effect of methods based on injection of a given composition gas as described herein before, other methods based on the injection of a gas and its further control have been developed in order to keep the original gas composition, by correcting the results of the reaction of said gas components with the fresh fish. European patent application 457431A illustrates a system adapted for insertion, and removal from the wall of a refrigerated container for respiring perishables, provided said system with means for monitoring and controlling oxygen and carbon dioxide concentration.However, it is known that even with this process control, if the conservation period on board is too long, some of most important the organoleptic properties of fresh fish will be lost, thus worsening the final product conditions.

The document WO 95/00030 describes a general controlled atmosphere container system for shipping, storing and ripening perishable products such as fruit and vegetables. A controller enables the container system to optimally alocate the capacity of the central source of the controlled atmosphere according a predetermines hierarchy of priorities for allocating the controlled atmosphere gas to the individual containers. Freshly harvested, unriped perishable products are maintained at 57 to 70 F according to an atmosphere control mode dependant off ripening product type, i.e, from an initial ethylene atmosphere until the desired ripening degree is obtained, after which the ethylene is substitued by a low oxygen content atmosphere for the remaining storage and transportation procedures.

With the purpose to improve efficiently the quality of fresh fish onloaded from vessels, a process for the conservation of fresh fish, on board of fishing vesselss, has been developed by the application of a variable composition gas, object of the present invention. A second object of the present invention consists of the development of a system for the implementation of said process.

The present invention relates to a process for the conservation of fresh fish; on board of fishing vessels, which comprises storage and conservation operations, and is based on the conservation of the fresh fish inside of gas tight chambers and on the injection of a variable composition gas into each of said tight chambers in accordance with a curve that considers gas composition as a function of storage time specific for each type of fish, and having into account the estimated conservation period in addition to the refrigeration process, where factors such as gas composition, estimated on board storage time and freshness degree, i.e., the time elapsed since fish capture, the conservation temperature as well as other parameters turn out to be essential.

In particular, the process for the conservation of fresh fish, on board of fishing vessels, object of the present invention comprises a first storage phase by which the fish is stored inside a space divided into several gas tight chambers designed for the storage of fish in batches, boxes, containers or similar, provided with openings to make it possible the contact of the stored fish with the injected gas, and additionally to make easier the processes of gas injection and extraction, such as it is described hereafter.

Since the composition of the gas to inject inside each of the tight chambers depends, among other factors, on the fish type or specie, the fishing products will be divided in groups with similar species, requiring similar gas compositions, such as non oily fish and oily fish, crustacean and shell fish.

Said storage phase is complemented with the refrigeration of stored product, to a temperature value close to 0°C, in the temperature range between - 1°C and + 1°C. Said temperature will be maintained through the whole on board storage period.

Following that, a low pressure, value in the pressure range between 10 mbar and 100 mbar, gas composition is injected into said gas tight chamber through bottom of chamber, while the gas inside the chamber is forced out through upper side of said tight chamber. The application of injection and extraction processes to gas compositions in tight chambers at different heights improves gas circulation, prevents the injection and extinction gas from mixing with each other, and reduces the needed amount of injected gases.

Furthermore, the composition of injected gases comprises carbon dioxide (CO₂), and/or oxygen (O₂) and/or nitrogen (N₂), with the option of replacing the nitrogen, in some cases, with an inert gas such as argon (Ar). The proportions of each gas component will be determined by the type of fish, its degree of freshness, i.e., the time elapsed since time of fish capture, and the estimated storage period, all these parameters providing a series of curves showing the relation of gas compositions with respect to time, to be applied during the on board stoke period.

This way, after the storage and refrigeration phase, a gas mixture is injected into each tight chamber, the composition of said gas mixture being determined by parameters described in the last paragraph.

Once the initial storage conditions, temperature and initial gas composition are established, a periodic control phase made by means of an automatic control system, of the gas mixture inside each tight chamber will be done by comparing and correcting said gas mixture composition with respect to the ideal gas composition that corresponds to the values of the theoretical composition curve.

The complementary control and adjustment phases have a cyclic characteristic and will repeat during the whole on board storage period, i.e., until arrival of fishing vessel at destination point.

Finally, the process will be completed with the restoring of ambient conditions in each tight chamber, what will be done, before arrival of vessel at harbour, and consisting of injection of air, at a low pressure value between 50 mbar and 100 mbar, and extraction of gas composition from inside the tight chamber.

Said restoring phase can be carried out, optionally, at any time during storage period, caused by the need for opening some tight chamber, or the recharge of a tight chamber, for the access of a maintenance team for repair or inspection jobs, or for any similar operation.

The injection, extraction, restoring and control of gas mixture inside each tight chamber containing the fresh fish, is done in an independent and individual manner in each chamber.

A second object of the invention is the system to carry out the process for conservation of fresh fish on board of fishing vessels, based on the application of a variable composition gas as described hereinbefore.

Said system comprises the means for the storage of fresh fish, means for the refrigeration of the stored products inside said storage means, a system for the control and evaluation of the real gas mixture inside each of the storage facilities and adjusting said real gas composition to the ideal gas composition, means for the injection and extraction of said gas composition to/from said storage means, and means for the preparation of the gas mixture to be injected into said storage means.

In particular, the facilities for the storage of fresh fish on board inside the cargo space divided into gas tight chambers, prepared for the storage in batches or boxes or containers, made of plastic and provided with openings that will make it possible for the fish to get in contact with the gas inside each tight chamber. Said gas tight chambers are, usually, part of vessel structure, and are provided with means for their fitting to the vessel frame, beams, double deck, etc, for steel hulls as well as for fiber glass reinforced plastic hulls, and they are provided with access means consisting of gas tight gates.

With the purpose of reinforcing own vessel frame, the tight chambers are arranged in such a way that walls or partitions of said tight chambers should fit with frame or beams, and even could be part of said structure, so that some of the common structural members could be avoided. All this will result in an arrangement in which, the tight chambers are located on both sides of vessel cargo space, with a central corridor. At bow end the tight spaces are centrally located due to a narrower vessel width.

The means for refrigeration of stored products in said storage facilities consist of having ice in contact with the product and cooling coils located at cargo space ceiling, but any other cooling system can be used in order to maintain the product within the temperature limits required by the process, i.e., close to 0 °C at the temperature range between - 1 °C and + 1 ^{a}C.

The system for the control and evaluation of real gas composition inside each of the storage facilities and for the adjustment of said real gas composition to the theoretical gas composition consists of automatic control means to measure the real proportions of the gas contained within each storage facility, to compute and record the parameters corresponding to the nominal, theoretical or optimum proportions of the gas inside each of the storage facilities, considering those parameters such as the type of fish, the freshness degree or time elapsed since the fish capture and the estimated conservation period, the means for the preparation of the gas mixture to be injected into the storage means, and means for the adjustment of the real gas composition to the theoretical optimum gas composition.

The system for injection and extraction of the gas composition consists of a piping system for the injection of the gas mixture from a mixture tank into each one of the tight chambers through a piping network connected to a header, provided with'a remote controlled inlet valve installed on each individual feeding pipe, whereas the extraction system conveys the gas mixture from each one of the tight chambers out to the exterior air, by means of a piping system provided with isolation devices to prevent the extracted gas from getting in contact with the exterior air as a result of the pressure gradient. Said system comprises a remote controlled valve or a liquid seal or water trap with a glass cover for water level check. The control of inlet and outlet remote controlled valves is done by the automatic control system as described hereinbefore.

Said piping system is complemented with a pump system for the drainage of water and fluids out of the chambers and it consists of a drain pump provided with a remote controlled valve for each of the tight chambers. The pump start and stop, as well as the opening and closing of the valves will be controlled by said automatic control system.

The system for the preparation of the gas mixture to be injected into said storage spaces consists of mass control devices controlled through the automatic control system, provided with inlet valves for the gas mixture components, such as, carbon dioxide (CO₂), and/or oxygen (O₂), and/or nitrogen (N₂), with the option of replacing nitrogen, in some cases, with an inert gas such as, argon (Ar). The proportion of the gas mixture components is determined by means of the control and adjustment system described hereinbefore.

The gases used for the composition of the gas mixture are stored in vessels or taken directly from open atmosphere, but in this case the system should be provided with proper facilities to obtain required gases from the atmosphere. In particular, in order to reduce the needs for stored gases, air will be used instead of nitrogen (N₂), this change requiring volumen corrections since in most cases the percentage of oxygen (O₂) obtained in the mixture will be sufficient to carry out the required functions. However, in the case that the oxygen (O₂), percentages are not acceptable, a nitrogen (N₂) vessel storage system or a proper facility will be required to obtain nitrogen from the air. Furthermore, to prevent the excess of high pressure oxygen (O₂) and to reduce operation costs, the system will be provided, preferably, with the facilities to obtain oxygen (O₂) from the air, adequate to produce high quality oxygen (O₂) and with a low pressure, at the 3,5 kg/cm² to 4,5 kg/cm² range, storage facility. Finally, gases such as carbon dioxide (CO₂) or argon (Ar) are stored on board in bottles.

The system for the application of the process for the conservation of fresh fish on board of fishing vessels, based on the application of a variable composition atmosphere as described hereinbefore is complemented with a safety system. Said safety system consists of a forced ventilation system to be installed in closed spaces adjacent to tight chambers. Also, the system will be provided with a ventilation system in the cargo space corridors, with automatic operation in case of operator access with at least one chamber in use. With the purpose of preventing a rise of cargo space temperature, said ventilation system will be provided with a cooling coil battery to cool incoming air. Also, said safety system will be complemented with a set of gas analyzers for the detection of high contents of carbon dioxide (CO₂), and low or high contents of oxygen (O₂).

From all said hereinbefore it can be seen the advantages obtained by the process for the conservation of fresh fish on board of fishing vessels, based on the application of a variable composition atmosphere and a system for the implementation of said process, object of present invention, these advantages being the use of an efficient conservation system of simple installation applicable to any type of fishing vessel. Also, the individual treatment for each type of fish makes it possible to obtain better conservation conditions since these are adapted to each particular type of fish. Also, the system for the application of said process can be carried out on board of any type of fishing vessel, without the need of carrying large quantities of gas bottles and keeping the safety standards for the operators own safety.

To better understand the object of the present invention a preferential practical embodiment of the process for the conservation of fresh fish on board of fishing vessels based on the application of a variable composition atmosphere and the system for the application of said process, is described hereinafter with reference to enclosed figures. Said figures show:

Figure 1 represents a flow diagram showing the process for the conservation of fresh fish on board of fishing vessels based on the application of a variable composition atmosphere object of the present invention.

Figure 2 shows a perspective view of a section of a fishing vessel provided with the system which includes an embodiment of the conservation process in accordance with Figure 1.

Figure 3 shows a connection diagram of the system which includes an embodiment of the conservation process in accordance with figure 2.

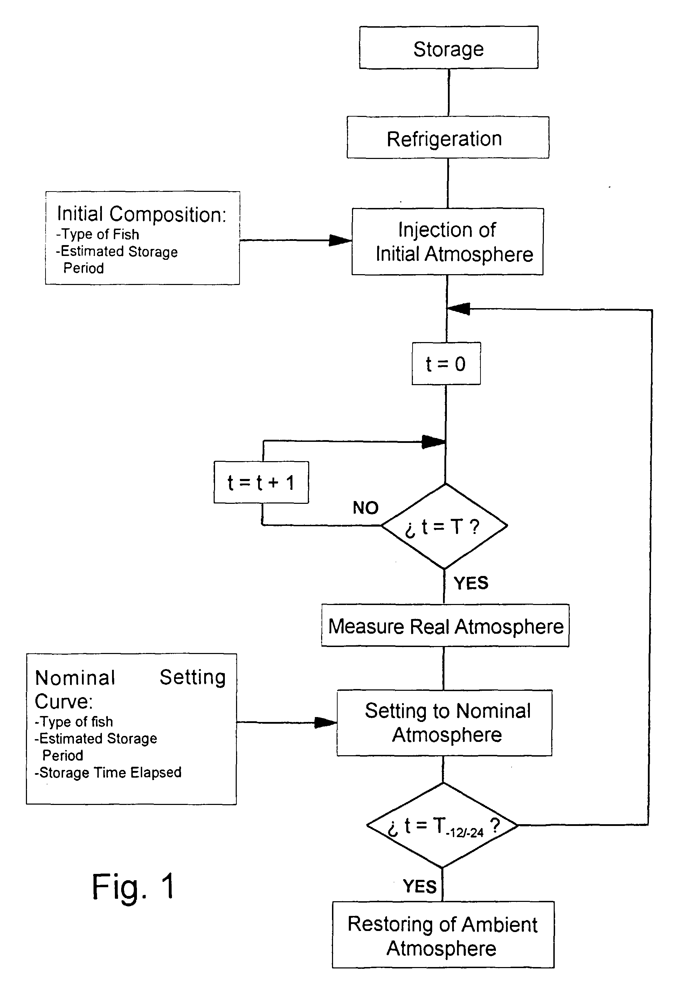

Figure 1 shows a flow diagram representing the process for the conservation of fresh fish on board of a fishing vessel, based on the application of a variable composition atmosphere object of the present invention.

Said process comprises a first storage phase in which the fish is stored in the cargo space divided into gas tight chambers prepared for storing fish in batches, boxes, containers or similar, locating within one chamber those fish species that require a similar gas mixture, such as non oily fish, oily fish, crustacean and shell fish. In case that the storage is made in boxes, containers or similar, they will be provided with openings to make it possible the contact of the stored fish with the injected gas, and additionally to improve the processes of gas injection and extraction, such as it is described hereafter.

Said storage phase is complemented with the refrigeration of stored product, to a temperature close to 0°C, at the temperature range between - 1°C and + 1°C. Said temperature will be maintained through the whole on board storage period.

Following that, a low pressure value in the pressure range between 10 mbar and 100 mbar, gas composition is injected into said gas tight chamber through bottom of chamber, while the existing gas is forced out, preferably through upper side of said tight chamber.

The composition of injected gases is determined by the type of fish to be conserved as well as by the estimated conservation period, and the mixture comprises carbon dioxide (CO₂), and/or oxygen (O₂) and/or nitrogen (N₂), with the option of replacing the nitrogen, in some cases, with an inert gas such as, argon (Ar).

Once the initial storage conditions, temperature and. initial gas composition, are established, a periodic (T period) control phase is made by means of an automatic control system.

Said control phase starts with determining the nominal adjustment curve, which determines the proportions of the gas mixture required at every moment, depending on the type of fish, its freshness degree, i.e., on the storage time since the capture, and on the estimated conservation period. All these parameters providing a series of curves showing the relation of gas compositions with respect to time, to be applied during the on board conservation period.

Once the nominal setting curve has been determined, a periodic control will be done on the proportions of the gas mixture inside each one of the tight chambers, to adjust said mixture to said nominal curve.

The control and setting complementary phases are of cyclic character, with T period, and will wholly repeat during the on board storage time, i.e., until vessel arrival at port of destination.

The conservation process will be completed restoring the ambient conditions within each tight chamber, what will be done before arrival of vessel at port, time which will correspond to point T_{-12/-24} on flow diagram shown in Figure 1. Said restablishing phase consists of injecting air, at a low pressure between 50 mbar and 100 mbar, and extracting the gas composition from inside the gas tight chamber.

Said restablishing phase can be carried out, optionally, at any time during storage period, caused by the need for opening some tight chamber, or the recharge of tight chamber, for the access of a maintenance team for repair or inspection jobs, or for any similar operation.

Obviously, the processes for injection, extraction, restablishment and control of gas composition inside each one of the tight chambers for the on board fish storage, will be done independently and individually on each of them.

Several practical examples of nominal setting curves for different types of fish are described as follows:

### Example 1 - Non-oily species with estimated storage time of up to 15 days.

No specific gas is introduced during the first two days. From day 3 to day 10 the percentage of carbon dioxide (CO₂) is increased from normal up to 35% to 45%, and the percentage oxygen (O₂) from normal to 35% to 45%. From day 11 the values obtained (35%-45% for both carbon dioxide and oxygen, completing with nitrogen) shall be maintained, with all indicated percentages referred to volume.

### Example 2 - Non-oily species with estimated storage time between 15 and 30 days.

No specific gas is introduced during the first two days. From day 3 to day 11 the percentage of carbon dioxide (CO₂) is increased from normal up to 45% to 55%, keeping this value onwards. The amount of oxygen (O₂) must be kept, with a percentage of 15% to 25% from day 3 to end of storage period, with all indicated percentages referred to volume.

### Example 3a - Oily fish, Small species (sardine, mackerel, etc.)

The amount of oxygen must be kept at a low content value, between 1% and 5%, from a few hours after fishing until the end of storage period. The content of carbon dioxide (CO₂) must be continously increased from 15% to 25% the first day, up to 45% to 55% day 4 of storage, keeping the same percentage onwards, with all indicated percentages referred to volume.

### Example 3b - Oily fish, Large species (tuna fish, etc.)

The amount of oxygen (O₂) must be kept at a content value of 5% to 15%, from a few hours after the capture until the end of the storage period. The carbon dioxide (CO₂) content must be progressively increased from 15% to 25% the first day, up to 45% to 55% the day 4 of storage, keeping the same percentage onwards, with all percentages indicated referred to volume.

### Example 4 - Crustaceans

The oxygen (O₂) amount must be kept constant for the whole storage period with a percentage value of, between 5% and 15%. The carbon dioxide (CO₂) content must be progressively increased from 5% to 15% the first day, up to 30% to 40% the day 5 of storage, keeping the same percentage onwards, with all percentages indicated referred to volume.

### Example 5 - Shell fish

The oxygen (O₂) amount must be kept constant for the whole storage period at a percentage value of, between 10% and 20%. The carbon dioxide (CO₂) content must be progressively increased from 5% to 15% the first day, up to 45% to 55% the day 6 of storage, keeping the same percentage onwards, with all values indicated referred to volume.

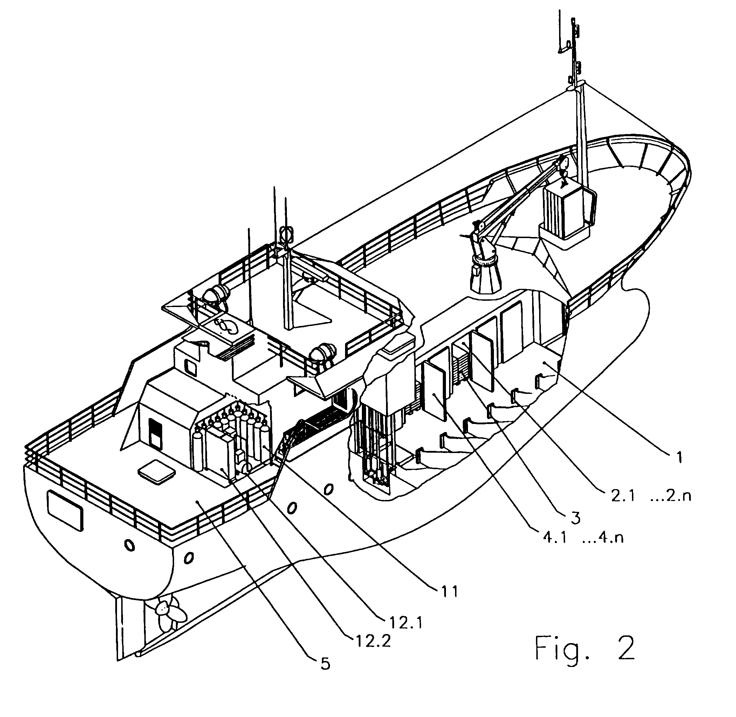

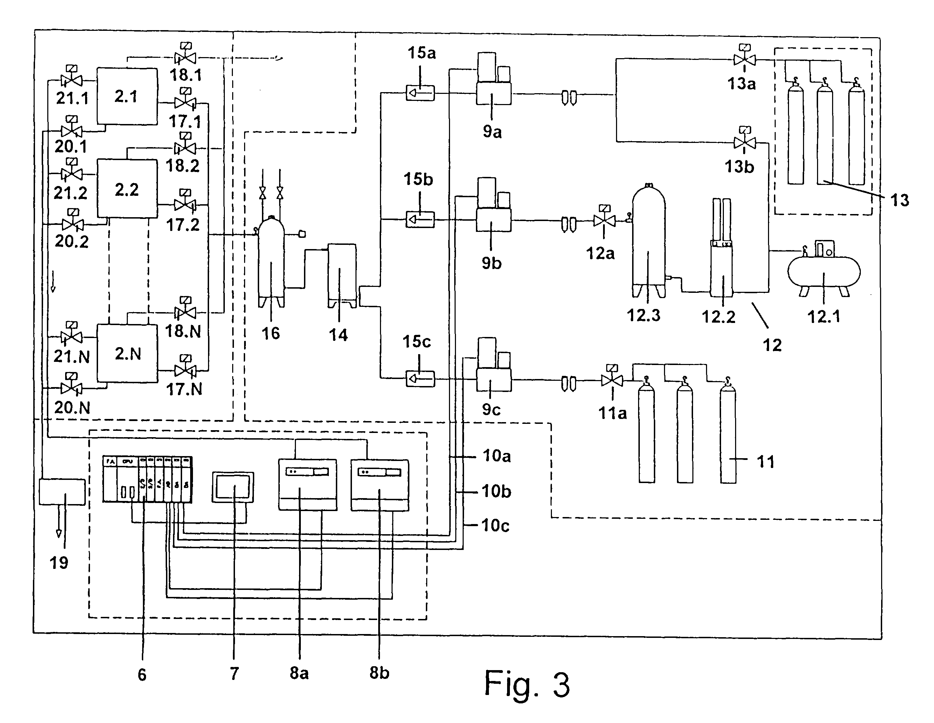

Figures 2 and 3 show a preferential practical embodiment to implement the process for the conservation of fresh fish, on board of fishing vessels, based on the application of a variable composition atmosphere as described hereinbefore.

In particular, figure 2 shows a section of a fishing vessel provided with the system for the implementation of the process for the conservation of fresh fish on board, as described hereinbefore.

Said system comprises the means for fresh fish storage consisting of a cargo space (1) divided into gas tight chambers (2.1, 2.2, ...2.N), which are adequate to keep the fish in batches, boxes (3), containers or similar, made of plastic and provided with openings to make it possible that the stored fish gets in contact with the gas inside each of said gas tight chambers (2.1, 2.2, ....2.N). Said gas tight chambers (2.1, 2.2,....2.N) are part of the vessel frame and are provided with means for their coupling to the vessel frame, beams, double deck, etc, for steel hull as well as for fiber glass reinforced plastic hull, and they are provided with access means consisting of gas tight gates (4.1, 4.2 ... 4.N).

With the purpose of reinforcing own vessel frame, the tight chambers (2.1, 2.2 ...2.N) are preferably arranged in such a way that walls or partitions of said tight chambers (2.1, 2.2 ....2.N) should fit with vessel frame or beams, and could even be part of said structure, so that some of the common structural members could be avoided. All this will result in an arrangement in which the tight spaces are located on both sides of vessel cargo space, with a central corridor. At bow end the tight chambers are centrally located due to a narrower vessel width. Obviously, it is possible to have any other arrangement for said tight chambers (2.1, 2.2, ....2.N) within the fishing vessel cargo space (1) to take maximun advantage of vessel capacity.

Each of said tight chambers (2.1, 2.2, ...2.N) is provided with means for the refrigeration of products stored within them, consisting of having ice in contact with the product and cooling coils located at cargo space bed, but any other cooling system can be used in order to maintain the product within the temperature limits required by the process, i.e., close to 0 °C.

The system for the implementation of the process for the conservation of fresh fish on board in addition to the means for the said storage and refrigeration, is provided with the facilities for the control and adjustment of said real gas composition with respect to the theoretical gas composition, a system for the injection into and extraction from said storage spaces of corresponding gas composition and the means for the preparation of the gas mixture to be injected into the said storage spaces (5), located outside the vessel cargo space (1).

Figure 3 shows a practical embodiment of the system for the control and evaluation of real gas composition inside each of said storage spaces and for the adjustment of said real gas composition to the theoretical optimum gas composition. Said control and adjustment system consists of an automatic control system (6) provided with an users interface made up by a touch operated monitor (7).

Said automatic control system (6) is provided with computing and recording means to determine the setting curve, called nominal setting curve, relating the gas composition with storage time, thus determining the proportions of the gas mixture inside each one of the gas tight chambers (2.1, 2.2,...2.N) at every moment, and depending on type of stored fish, freshness degree, i.e., time elapsed since fish capture, and on estimated conservation period.

Once the nominal setting curve has been determined and recorded by the automatic control means (6), these will be capable to determine at any moment the actual working point at the nominal setting curve.

Furthermore, said adjustment system is provided with means to determine the real gas composition inside each one of the gas tight chambers (2.1, 2.2,...2.N) consisting of a series of sampling valves (21.1, 21.2,...21.N) remote controlled from the automatic control system, which send the samples taken from each one of gas tight chambers (2.1, 2.2,...2.N) to a set of analyzers (8a, 8b), for the determination of proportions of carbon dioxide (CO₂), oxygen (O₂), nitrogen (N₂) and/or some inert gas, such as argon (Ar).

The system for the preparation of the gas mixture to be injected into each one of tight chambers (2.1, 2.2,...2.N) consists of mass control devices (9a, 9b, 9c) controlled by means of the automatic control system (6) through the corresponding communication buses (10a, 10b, 10c), and provided with inlet valves for the gas mixture components, such as, carbon dioxide (CO₂) (11), and/or oxygen (O₂) (12), and/or nitrogen (N₂) or air (13), with the option of replacing nitrogen, in some cases, with an inert gas such as, argon (Ar). The proportion of the gas mixture components is determined by means of the automatic control system (6) which acts on the inlet valves (11a, 12a, 13a, 13b) controlling the gas flowing into the gas mass control devices (9a, 9b, 9c). From here, each amount of gases supplied is conveyed through corresponding pipes into gas mixer (14). Each pipe is provided with a check valve (15a, 15b, 15v), to prevent back-flow return. Once the mixture is completed in said gas mixer (14), said homogeneous mixture is conveyed into a mixture tank (16) arranged to inject the gas composition into corresponding tight chamber (2.1, 2.2,...2.N) by means of an injection system .

The system for injection and extraction of the gas composition consists of a piping network to convey through the injection system, the gas mixture, from mixture tank (16) produced by the gas mixer (14) into each one of the tight chambers (2.1, 2.2,...2.N) through a piping network connected to a header, provided with a remote controlled inlet valve (17.1, 17.2,...17.N) installed on each individual feeding pipe, whereas the extraction system conveys the gas mixture from inside each one of the tight chambers (2.1, 2.2, ...2.N) out to the exterior air, by means of a piping system provided with isolation devices to prevent the extracted gas from getting in contact with the exterior air as a result of the pressure gradient. Said system comprises a remote controlled valve (18.1, 18.2,...18.N) controlled by the automatic control system (6) or a liquid seal or a water trap with a glass cover for water level check (not shown in the figures). The control of inlet and outlet remote controlled valves in each tight chamber (2.1, 2.2,...2.N) is done by the automatic control system (6) as described hereinbefore.

Said piping network is complemented with a pump system for the drainage of water and fluids out of the chambers and it consists of a drain pump (19) provided with a remote controlled valve (20.1, 20.2,...20.N) for each of the tight chambers. The pump start and stop operations, as well as the opening and closing of the valves, will be controlled through said automatic control system (6).

The gases used for the preparation of the gas mixture are stored in vessels (as for O₂ or N₂) or taken directly from open atmosphere, but in this case the system should be provided with proper facility to obtain required gases from the atmosphere. In particular, in order to reduce the needs for stored gases, air will be used instead of nitrogen (N₂), tills change requiring volumen corrections since in most cases the percentage of oxygen (O₂) obtained in the mixture will be sufficient to carry out the required functions. However, in the case that the oxygen (O₂) percentages are not acceptable, a nitrogen (N₂) vessel storage system (13) or a proper facility to obtain nitrogen from the air will be required.

The equipment required to obtain oxygen (O₂) from the air consists of a compressor unit (12.1), an oxygen generator (O₂) (12.2) and an oxygen (O₂) tank (12.3). The equipment required for the production and storage of nitrogen (N₂) presents a similar arrangement.

The system for the application of the process for the conservation of fresh fish on board of fishing vessels, based on the application of a variable composition atmosphere as described hereinbefore is complemented with a safety system. Said safety system consists of a forced ventilation system to be installed in the closed spaces adjacent to tight chambers (2.1, 2.2,...2.N). Also, the system will be provided with a ventilation system in the cargo space (1) corridors, with automatic operation in case of operator access with at least one chamber (2.1, 2.2,...2.N) in use. With the purpose of preventing a rise of cargo space (1) temperature, said ventilation system will be provided with a cooling coil battery to cool incoming air in cargo space (1). Also, said safety system will be complemented with a set of gas analyzers for the detection of high contents of carbon dioxide (CO₂), and low or high contents of oxygen (O₂).

Once the nature of present invention as well as a practical embodiment of same have been sufficiently described, it has only to be added that as in the whole and in the parts of it it will be possible to introduce changes in shape, materials and arrangement, as long as such changes do not sustantially modify the characteristics of the invention which are claimed hereinafter.

## Claims

1. A process for the conservation of fresh fish on board of fishing vessels, based on the application of a variable composition atmosphere, characterized in that said process comprises the following phases:
a) a storage phase, consisting of the storage of the captured fish in storage means such as a cargo space divided into gas tight chambers, adequate for the storage of fish in batches, boxes, containers or similar, provided with openings.
b) a phase of refrigeration of stored product, comprising cooling said product down to a temperature value in the temperature range between - 1°C to + 1°C, and keeping said temperature value for the whole period of on board fish storage;
c) a phase to determine a theoretical setting curve, called nominal setting curve, representing the optimum gas composition related to time, consisting of determining the gas composition of the optimum gas mixture to be provided inside each one of said storage means, depending on type of stored fish, freshness degree of same, i.e., the time elapsed since fish capture, and the estimated conservation time;
d) a phase of application of an initial gas consisting of the injection into said storage means through bottom of said tight chamber, of a gas composition determined from said nominal setting curve, at a very low pressure value in the pressure range between 10 mbar and 100 mbar, with the extraction of gas inside said chambers, for instance, through said tight chamber upper side, out to the exterior atmosphere;
e) a phase of periodic control, with T period, consisting of a cyclic sequence of measuring steps of real gas composition inside each one of the storage means, comparison with the corresponding theoretical or nominal composition, and adjustment or correction of gas composition inside the corresponding storage means, consisting of adjusting the real gas composition with respect to nominal gas composition, defined as that composition corresponding to the theoretical composition curve or nominal setting curve;
f) a phase of restoring ambient atmosphere in each one of tight chambers, to be done before fishing vessel arrival at port, consisting of injecting air at low pressure values being at the pressure range between 50 mbar and 100 mbar, and extracting the gas composition from inside the tight chamber.

2. A process for the conservation of fresh fish on board of fishing vessels, based on the application of a variable composition atmosphere, according to the first claim, characterized in that the storage phase comprises the combined storage, within the same tight chamber, of species which require similar gas composition, dividing said species into groups such as non oily fish, oily fish, crustaceans and shell fish.

3. A process for the conservation of fresh fish on board of fishing vessels, based on the application of a variable composition atmosphere, according to the first claim, characterized in that the gas composition to be injected under said phases of initial atmosphere and periodic control consists of a mixture comprising carbon dioxide (CO₂), and/or oxygen (O₂), and/or nitrogen (N₂), with the option of replacing nitrogen, in some cases, with an inert gas such as argon (Ar).

4. A process for the conservation of fresh fish on board of fishing vessels, based on the application of a variable composition atmosphere, according to the first claim, characterized in that the phase of restoring ambient atmosphere can be done at any time during the storage period.

5. A process for the conservation of fresh fish on board of fishing vessels, based on the application of a variable composition atmosphere, according to the first claim, characterized in that the nominal setting curve for non oily species with estimated storage period of up to 15 days, consists of not introducing any special atmosphere during the first two days, starting on the third day with a process of progressively increasing the carbon dioxide (CO₂), from normal ambient content up to 35% to 45% on day 10, and the oxygen (O₂), from normal ambient content up to 35% to 45% on day 10, and from day 11, said percentages 35% to 45% of carbon dioxide (CO₂), and 35% to 45% of oxygen (O₂) will be maintained, completing with nitrogen (N₂) to reach 100%, with said percentages referred to volume.

6. A process for the conservation of fresh fish on board of fishing vessels, based on the application of a variable composition atmosphere, according to the first claim, characterized in that the nominal setting curve for non oily species, with an estimated storage period of 15 to 30 days, consists in that no special atmosphere will be intoduced during the first two days, starting the third day a process of progressive increase of carbon dioxide (CO₂), from normal ambient content up to 45% to 55% on day 11, keeping that percentage onwards, and the oxygen (O₂) amount will be kept constant from third day till end of storage period, in a percentage of 15% to 25%, with all percentages referred to volume.

7. A process for the conservation of fresh fish on board of fishing vessels, based on the application of a variable composition atmosphere, according to the first claim, characterized in that the nominal setting curve for small species of oily fish, such as sardines, mackerels and similar, consists of that the oxygen (O₂) content is kept between 1% and 5% from a few hours after the capture till the end of the storage period, and the carbon dioxide (CO₂) content is progressively increased from 15% to 25% the first day, up to 45% to 55% on day 4 of storage, and keeping these percentages constant, with all percentages indicated referred to volume.

8. A process for the conservation of fresh fish on board of fishing vessels, based on the application of a variable composition atmosphere, according to the first claim, characterized in that the nominal setting curve for large species of oily fish, such as tune fish and similar, consists of keeping the oxygen (O₂) in a percentage of 5% to 15%, from a few hours after the capture till the end of the storage period, and the carbon dioxide (CO₂) content is progressively increased from 15% to 25% the first day, up to 45% to 55% on day 4 of storage, keeping then the percentage constant, with all percentages indicated referred to volume.

9. A process for the conservation of fresh fish on board of fishing vessels, based on the application of a variable composition atmosphere, according to the first claim, characterized in that the nominal setting curve for crustacean consists of keeping the oxygen (O₂) amount constant for the whole storage period, with a content of 5% to 15%, and the carbon dioxide (CO₂) amount is progressively increased from 5% to 15% the first day, up to 30% to 40% on day 5 of storage, keeping then this percentage constant, with all percentages indicated referred to volume.

10. A process for the conservation of fresh fish on board of fishing vessels, based on the application of a variable composition atmosphere, according to the first claim, characterized in that the nominal setting curve for shell fish consists of keeping constant the oxygen (O₂) amount for the whole storage period with a content of 10% to 20%, and the carbon dioxide (CO₂) content is progressively increased from 5% to 15% the first day, up to 45% to 55% on day 6 of storage, keeping then these percentages, with all percentages indicated referred to volume.

11. A system for the implementation of the process for the conservation of fresh fish on board of fishing vessels, based on the application of a variable composition atmosphere, according to claims 1 to 10, characterized in that it comprises:
a) the means for the storage of fresh fish on board inside the cargo space (1) divided into gas tight chambers (2.1, 2.2,...2.N) provided with means for connection to frame, beams, decks, double bottom, etc. of vessel, for steel hull as well as for fiber glass reinforced plastic hull, provided with access means consisting of gas tight gates (4.1, 4.2,...4.N), prepared to store the fish in batches, boxes (3), containers or similar, usually made of plastic materials and provided with openings;
b) the means for refrigeration of stored products in said storage facilities consist of having ice in contact with the product and cooling coils located at cargo space ceiling (1);
c) the means for the control and evaluation of real gas composition inside each of the storage facilities and for the adjustment of said real gas composition to the theoretical gas composition consists, more exactly of an automatic control system (6) to control the measuring devices which determines the real proportions of the gas contained within each storage facility, provided with means to compute and record the parameters corresponding to the nominal, theoretical or optimum proportions of the gas inside each of the storage facilities, and means for sampling the gas inside each one of said storage means, consisting of a set of sampling valves (21.1, 21.2, ...21.N) controlled by said automatic control system (6), and of a set of analyzers (8a, 8b), adequate to determine the composition of each of the gas samples taken;
d) the system for injection and extraction of the gas composition consists of a piping system for the injection of the gas mixture from a gas mixture tank (16) into each one of the tight chambers through a piping network connected to a header, provided with a remote controlled inlet valve (17.1, 17.2,...17.N) controlled by the automatic control system (6) installed on each individual feeding pipe,.with tight coupling means to said storage means located inside them, and an extraction system consisting of a piping network to convey the gas mixture extracted from said storage means out to the exterior air having an isolation device consisting of remote controlled outlet valves (18.1, 18.2, ...18.N) or liquid seals or water traps with glass inspection covers, with tight coupling devices to said storage means located on top of the same;
e) a system for the preparation of a gas mixture to be injected into said storage means, consisting of mass control devices (9a, 9b, 9c) controlled by the automatic control system, provided with inlet valves (11a, 12a, 13a, 13b) arranged to introduce the components of said gas mixture into said mass control devices (9a, 9b, 9c).

12. A system according to claim 11, characterized in that walls or partitions of said gas tight chambers (2.1, 2.2, ...2.N) are fitted to frame and beams of vessel arranged on both sides of vessel cargo space, with a central corridor and a gas tight chamber centrally located at the bow end.

13. A system according to claim 11, characterized in that the piping network is provided with a pump to drain the water and liquids produced by the fish, consisting by a drain pump (19) with drain valves (20.1, 20.2, ...20.N) remotely controlled by the automatic control system for each of the tight chambers (2.1, 2.2, ...2.N), with said automatic control system controlling said pump start and stop (19), as well as the opening and closing of said drain valves (20.1, 20.2, ...20.N).

14. A system according to claim 11, characterized in that gases used for the preparation of gas mixture are stored in bottles.

15. A system according to claim 11, characterized in that it is provided with a system to obtain a gas such as, oxygen (O₂) and/or nitrogen (N₂) from open atmosphere, consisting of an air compressor (12.1) and the corresponding gas generator, and a system for storage at low pressure values being at the pressure range between 3.5 kg/cm² and 4.5 kg/cm², consisting of the corresponding gas tank (12.3).

16. A system according to claim 11, characterized in that it is provided with a safety system consisting of a forced ventilation system to be installed in closed spaces adjacent to the tight chambers, a ventilation system with means for cooling the air, such as a cooling coil, with automatic operation to be installed in cargo space corridors, and a set of gas analyzers provided with an alarm, prepared for the detection of a wrong content of at least one of the components of the gas mixture inside each one of the tight chambers.

17. A system according to claim 11, characterized in that the isolation system of exterior and interior gases consists of an inlet valve (18.1, 18.2, ...18.N) controlled by the automatic control system.

18. A system according to claim 11, characterized in that the isolation system of exterior and interior gases consists of a liquid seal made up by a water trap with a glass cover for visual inspection, with tight coupling means to said storage means usually located on their upper side.

## Patentansprüche

1. Konservierungsverfahren von frischem Fisch an Bord von Fischereischiffen basierend auf die Anwendung von Atmosphäre variabler Zusammensetzung, **dadurch gekennzeichnet** dass es folgende Phasen umfasst:
□
a) Lagerungsphase, bestehend aus der Lagerung des gefischten Fisches in Lagerungsmittel, wie vorzugsweise ein in gasdichten Räumen unterteilter Laderaum, geeignet für die Anhäufung von Fisch, lose oder in Kisten, vorzugsweise mit Öffnungen.
b) Anwendungsphase von Kälte auf das gelagerte Produkt, welche die Anwendung von Kälte bis hin zu einer Temperatur von vorzugsweise zwischen -1°C und +1°C und die Einhaltung dieser Temperatur während der ganzen Lagerungsperiode umfasst.
c) Festlegungsphase einer theoretischen Einstellkurve, genannt Nenneinstellkurve, welche die optimale zeitabhängige Gaszusammensetzung darstellt, die aus der Festlegung der Gaszusammensetzung der optimalen Atmosphäre besteht, die jederzeit abhängig von der konservierten Fischart, dem Frischegrad desselben d.h. der seit dem Fischfang abgelaufenen Lagerungszeit, und der geschätzten Konservierungszeit im Inneren von jedem einzelnen der besagten Lagerungsmittel zu Verfügung stehen muss.
d) Anwendungsphase einer Anfangsatmosphäre, die aus der Einspritzung in besagten Lagerungsmittel vorzugsweise im unteren Teil besagter abgedichteten Abteilung einer ausgehend von genannter Nenneinstellungskurve festgelegten Gaszusammensetzung unter sehr niedrigem Druck vorzugsweise zwischen 10 mbar und 100 mbar besteht, wobei die in besagten Kammern existierende Atmosphäre vorzugsweise durch den Oberteil besagter Kammern zum Äusseren geleitet verdrängt wird.
e) Periodische Kontrollphase der Periode T, bestehend aus der zyklischen Folge von Messungsetappen der reellen Gaszusammensetzung in jedem einzelnen Lagerungsmittel, Vergleich mit der entsprechenden theoretischen oder Nennzusammensetzung, und Einstellung oder Berichtigung der Gaszusammensetzung im entsprechenden Lagerungsmittel, bestehend aus der Einstellung der tatsächlichen Gaszusammensetzung auf die Nennzusammensetzung unter welche man jene Zusammensetzung versteht die sich der theoretischen Einstellungskurve oder Nenneinstellungskurve anpasst;
f) Wiederherstellungsphase der Erdatmosphäre in jeder einzelnen abgedichteten Abteilung, vorzugsweise auszuführen innerhalb von zwischen 12 und 24 Stunden vor Ankunft des Schiffes im Hafen, bestehend aus der Einspritzung vor Luft unter niedrigem Druck, vorzugsweise zwischen 50 mbar und 100 mbar, und dem Entzug der im Inneren der abgedichteten Abteilung vorhandenen Gaszusammensetzung.

2. Konservierungsverfahren von Frischfisch an Bord von Fischereischiffen basierend auf die Anwendung einer Atmosphäre variabler Zusammensetzung, nach dem ersten Anspruch, **dadurch gekennzeichnet** dass die Lagerungsphase aus der in einer abgedichteten Abteilung gemeinsamen Lagerung von Arten deren optimale Gasmischung ähnlich ist, wobei besagte Arten vorzugsweise in nicht fettigen, fettigen, Krusten- und Weichtieren verteilt angehäuft werden.

3. Konservierungsverfahren von Frischfisch an Bord von Fischereischiffen basierend auf die Anwendung einer Atmosphäre variabler Zusammensetzung nach dem ersten Anspruch, **dadurch gekennzeichnet** dass die in besagten Anwendungsphasen einer Anfangsatmosphäre und einer periodischer Kontrolle einzuspritzende Gaszusammensetzung vorzugsweise aus Kohlendioxyd (CO₂) und/oder Sauerstoff (O₂) und/oder Stickstoff besteht, wobei man letzteren in einigen Fällen mit einem Edelgas wie vorzugsweise Argon (Ar) ersetzen könnte.

4. Konservierungsverfahren von Frischfisch an Bord von Fischereischiffen basierend auf die Anwendung einer Atmosphäre variabler Zusammensetzung, nach dem ersten Anspruch, **dadurch gekennzeichnet** dass die Wiederherstellungsphase der Erdatmosphäre jederzeit in der Lagerungsperiode durchgeführt werden kann.

5. Konservierungsverfahren von Frischfisch an Bord von Fischereischiffen basierend auf die Anwendung einer Atmosphäre variabler Zusammensetzung, nach dem ersten Anspruch, **dadurch gekennzeichnet** dass die Nenneinstellkurve für nicht fettige Arten mit einer vorgesehenen Lagerungszeit von bis zu 15 Tagen vorzugsweise daraus besteht, dass am ersten und zweiten Tag keine besondere Atmosphäre eingeführt wird, ab dem dritten Tag ein progressiver Anstiegsprozess, sowohl des Kohlendioxyds (CO₂) von dem Gehalt der Umgebungsatmosphäre bis hin zu vorzugsweise zwischen 35% und 45% am 10. Tag, wie auch des Sauerstoffs (O₂) ausgehend vom Gehalt der Umgebungsatmosphäre bis hin zu vorzugsweise 35% und 45% am 10. Tag gestartet wird, und ab dem 11. Tag die erhaltenen Werte zwischen 35% und 45% Kohlendioxyd (CO2), zwischen 35% und 45% Sauerstoff (O2), und ein Komplement zu 100% an Stickstoff (N2) gehalten werden, wobei alle angegebenen Werte Volumenprozente sind.

6. Konservierungsverfahren von Frischfisch an Bord von Fischereischiffen basierend auf die Anwendung einer Atmosphäre variabler Zusammensetzung, nach dem ersten Anspruch, dadurch gekennzeichnet dass die Nenneinstellkurve für nicht fettige Fische mit vorgesehener Lagerungszeit von zwischen 15 bis 30 Tagen vorzugsweise daraus besteht, dass am ersten und zweiten Tag keine besondere Atmosphäre eingeführt wird, ab dem dritten Tag ein progressiver Anstiegsprozess, sowohl des Kohlendioxyds (CO₂) vom Gehalt der Umgebungsatmosphäre bis hin zu vorzugsweise zwischen 35% und 45% am 11. Tag, von da an den prozentualen Anteil beibehaltend gestartet wird, und die Menge an Sauerstoff (O₂) vom dritten Tag an bis zum Ende mit einer Konzentrierung von vorzugsweise zwischen 15% und 25% gehalten wird, wobei alle angegebenen Werte Volumenprozente sind.

7. Konservierungsverfahren von Frischfisch an Bord von Fischereischiffen basierend auf die Anwendung einer Atmosphäre variabler Zusammensetzung, nach dem ersten Anspruch, **dadurch gekennzeichnet** dass die Nenneinstellkurve für kleine Arten der fettigen Fische, wie die Sardine, die Makrele und Ähnliche vorzugsweise daraus besteht dass die Sauerstoffmenge (O₂) mit einem Gehalt von vorzugsweise zwischen 1% und 5% von einigen Stunden nach dem Fischfang an bis zum Ende der Lagerungszeit gehalten, und der Gehalt an Kohlendioxyd (CO2) von vorzugsweise zwischen 45% und 55% am vierten Lagerungstag gleichmässig erhöht und von da an beibehalten wird, wobei alle angegebenen Werte Volumenprozente sind.

8. Konservierungsverfahren von Frischfisch an Bord von Fischereischiffen basierend auf Anwendung einer Atmosphäre variabler Zusammensetzung, nach dem ersten Anspruch, **dadurch gekennzeichnet** dass die Nenneinstellkurve für grosse Arten fettiger Fische wie der Thunfisch und Ähnliche vorzugsweise daraus besteht, dass die Sauerstoffmenge (O₂) mit einem Gehalt von vorzugsweise zwischen 5% und 15% von einigen Stunden nach dem Fischfang an bis hin zum Ende der Lagerungszeit gehalten, und der Gehalt an Kohlendioxyd (CO₂) von 15% und 25% am ersten Tag bis vorzugsweise zwischen 45% und 55% am vierten Lagerungstag gleichmässig erhöht, von da an der prozentuale Anteil konstant beibehalten wird, wobei alle angegebenen Werte Volumenprozente sind.

9. Konservierungsverfahren von Frischfisch an Bord von Fischereischiffen basierend auf die Anwendung einer Atmosphäre variabler Zusammensetzung nach dem ersten Anspruch, **dadurch gekennzeichnet** dass die Nenneinstellkurve für Krustentiere vorzugsweise daraus besteht, dass die Sauerstoffmenge (O₂) während der ganzen Lagerungszeit hindurch konstant mit einer Konzentrierung von vorzugsweise zwischen 5% und 15% gehalten, und der Gehalt an Kohlendioxyd (CO₂) von vorzugsweise 15% und 25% am ersten Tag bis vorzugsweise zwischen 30% und 40% am fünften Lagerungstag gleichmässig erhöht, von da an der prozentuale Anteil konstant beibehalten wird, wobei alle angegebenen Werte Volumenprozente sind.

10. Konservierungsverfahren von Frischfisch an Bord von Fischereischiffen basierend auf Anwendung einer Atmosphäre variabler Zusammensetzung nach dem ersten Anspruch, **dadurch gekennzeichnet** dass die Nenneinstellkurve für Weichtiere vorzugsweise daraus besteht, dass die Sauerstoffmenge (O₂) während der ganzen Lagerungszeit hindurch konstant mit einer Konzentrierung von vorzugsweise zwischen 10% und 20% gehalten, und der Gehalt an Kohlendioxyd (CO₂) von vorzugsweise 5% und 15% am ersten Tag bis vorzugsweise zwischen 45% und 55% am sechsten Lagerungstag gleichmässig erhöht, von da an der prozentuale Anteil konstant beibehalten wird, wobei alle angegebenen Werte Volumenprozente sind.

11. Konservierungsverfahren von Frischfisch an Bord von Fischereischiffen basierend auf Anwendung einer Atmosphäre variabler Zusammensetzung nach den Ansprüchen 1 bis 10 **gekennzeichnet dadurch** dass es
a) Frischfischlagerungsmittel vorzugsweise bestehend aus einem in mehreren gasdichten Kammern (2.1,... , 2.N) unterteilten Lagerraum (1), welche mit Verbindungsmittel zu den Spants, Balken, Verdecke, Doppelter Boden, etc. desselben versehen sind, sowohl für Schiffe mit Schiffsrumpf aus Stahl wie auch für Schiffe mit Glasfaserverstärktem Plastikrumpf, sowie auch Zugangsmittel vorzugsweise bestehend aus gasdichten Türen (4.1, 4.2, ... , 4.N) zur Anhäufung von Fisch lose oder in Kisten (3), Container oder Ähnliches geeignet, die vorzugsweise aus Plastik und vorzugsweise mit Öffnungen versehen sind;
b) Gefriermittel der in besagten Lagerungsmittel gelagerten Produkte, bestehend aus vorzugsweise mit dem Produkt in Kontakt tretendes Eis und vorzugsweise an der Decke des Lagerraumes (1) angeordnete Kühlschlangen;
c) Kontroll- und Prüfsystem der reellen, in jedem einzelnen der besagten Lagerungsmittel vorhandenen Gaszusammensetzung, und ein Einstellsystem von besagter reellen Gaszusammensetzung zur theoretischen Gaszusammensetzung, vorzugsweise bestehend aus einem programmierbaren Automaten (6) für die Steuerung der Messungsmittel zur Festlegung der reellen Zusammensetzung des in jedem einzelnen der besagten Lagerungsmittel vorhandenen Gases geeignet, welches über Kalkulierungs- und Speicherungsmittel zur Feststellung der Nenn- theoretischen- und optimalen Zusammensetzung des in jedem einzelnen der besagten Lagerungsmittel vorhandenen Gases verfügt, und Probeaufnahmemittel des in jedem einzelnen der besagten Lagerungsmittel vorhandenen Gases und welche vorzugsweise aus einem vom besagten programmierbaren Automaten (6) aus ferngesteuerten Probeaufnahmeventilblock (21.1, 21.2, ..., 21.N) und einen Satz von Gasprüfern (8a, 8b) besteht, geeignet zur Feststellung der Zusammensetzung jeder einzelnen der genommenen Gasproben.
d) Einspritzsystem vorzugsweise bestehend aus einem Rohrleitungssystem für die mittels einer Lunge (16) zu jedem einzelnen der besagten Lagerungsmittel durch besagtes Rohrleitungsnetz zu führenden Gasmischung geeignet, basierend auf ein Kollektor von welchem Verzweigungen zu jedem einzelnen der besagten Lagerungsmittel ausgehen, wobei es am Eingang von jedem über ein vom besagten programmierbaren Automaten (6) ferngesteuertes Eingangsventil (17.1, 17.2, ..., 17.N) verfügt, mit zu besagten Lagerungsmittel hermetischen und vorzugsweise an deren Unterteil sich befindlichen Verbindungsmitteln, und ein Entlüftungsgssystem vorzugsweise bestehend aus einem zum abführen der von jedem der besagten Lagerungsmittel bis zur Aussenatmosphäre verdrängten Gasmischung geigneten Rohrleitungssystem, wobei es über ein Entmischungssystem der inneren und äusseren Atmosphäre verfügt, vorzugsweise bestehend aus ein vom Kontrollsystem oder von ein durch einen mit Sichtglas versehenen Wasserheber ausgebildeten Flüssigkeitsverschlusssystem ferngesteuertes Entlastungsventil (18.1, 18.2, ..., 18.N).
e) Ein System zur Durchführung der Gasmischung die in besagten Lagerungsmittel eingespritzt werden soll, das vorzugsweise aus einigen vom Kontrollsystem gesteuerten Massenflusssteurungen (9a, 9b, 9c) besteht, welches mit Eingangsventile (11a, 12a, 13a, 13b) versehen ist, die zum Einführen der besagte Gaszusammensetzung bildenden Gase in besagten Massenflusssteuerungen (9a, 9b, 9c) geeignet sind.

12. System nach Anspruch 11 **dadurch gekennzeichnet** dass die Wände der besagten gasdichten Abteilungen (2.1, 2.2, ..., 2.N) mit Spants und Balken des Schiffes übereinstimmen, vorzugsweise an beiden Seiten des Lagerraums des Schiffes angeordnet sind, dabei einen zentralen Gang mit einer zentralen gasdichten Abteilung an den Bugenden lassen.

13. System nach Anspruch 11, **dadurch gekennzeichnet** dass das Rohrleitungssystem mit einem Lenzsystem des Eisschmelzwassers und den von den Fischen herstammenden Flüssigkeiten versehen ist, vorzugsweise bestehend aus einer Lenzpumpe (19) mit von der Steuereinheit für jede einzelne abgedichteten Abteilung ferngesteuerten Lenzventilen (20.1, 20.2, ..., 20.N), wobei Ein- und Ausschaltung besagter Lenzpumpe (19), sowie Öffnung und Verschluss besagter Lenzventile (20.1, 20.2, ..., 20.N) von besagtem Steuerungssystem aus kontrolliert wird.

14. System nach Anspruch 11, **dadurch gekennzeichnet** dass die für die Durchführung der Gaszusammensetzung zu verwendenden Gase in Flaschen gelagert sind.

15. System nach Anspruch 11, **dadurch gekennzeichnet** dass es mit einem System zur Erhaltung von Gasen versehen ist, wie vorzugsweise Sauerstoff (O₂) und/oder Stickstoff, ausgehend von der Atmosphäre, welches vorzugsweise aus einem Luftverdichter (12.1) einem Erzeuger (12.2) des entsprechenden Gases und ein Sammelsystem desselben bei niedrigem Druck, vorzugsweise zwischen 3,5 kg/cm2 und 4,5 kg/cm2, das aus einer Lunge (12.3) des betreffenden Gases besteht.

16. System nach Anspruch 11, **dadurch gekennzeichnet** dass es mit einem Sicherheitssystem versehen ist, welches aus ein in den abgedichteten Abteilungen anliegenden geschlossenen Räumen anzubringendes Zwangsbelüftungssystem besteht, einem Belüftungssystem mit Luftkühlungsmittel wie vorzugsweise eine vorzugsweise in den Gängen des Lagerraumes einzurichtenden automatisch betätigte Kühlungsbatterie, und einem Satz von mit Alarm versehenen Atmosphärenanalysatoren die zum Nachweis von anormalen Konzentrierungen von mindestens einem der Gase welche die Atmosphäre in jedem einzelnen der abgedichteteten Abteilungen zusammensetzen.

17. System nach Anspruch 11, **dadurch gekennzeichnet** dass das Entmischungssystem der inneren und äusseren Atmosphäre aus einem von besagtem Steuerungssystem aus ferngesteuerten Entlastungsventil (18.1, 18.2, ..., 18.N) besteht.

18. System nach Anspruch 11, **dadurch gekennzeichnet** dass das Entmischungssystem der inneren und äusseren Atmosphäre aus einem Flüssigkeitssperrsystem besteht, gebildet durch einen mit Sichtglas versehenen Wasserheber mit hermetischen Verkopplungsmitteln zu besagten Lagerungsmitteln, und die sich vorzugsweise am Oberteil derselben befinden.

## Revendications

1. Procédé de conservation de poisson frais au bord des navires de pêche basé dans la application d'un atmosphère de composition variable, **caracterisé en ce qu'il comprend** les phases de:
□
a) Phase de stockage, consistente en l'emmaganisinage de poisson frais dans des moyens d'emmaganisinage tels comme de préférence dans une cale compartimentée en des chambres étanches au gas, aptes pour l'accumulation du poisson an vrac où dans des caisses, container où similaires, de preference avec des ouvertures;
b) Phase d'application de froid dans les produits emmagasinés, qui comprend l'application de froid jusqu'a une temperature de, de préférence entre -1° et +1°C, et le maintien de ladite temperature pendant touta la période de stockage du poisson au bord.
c) Phase de détermination d'une courbe d'ajustement théorique, dénomminée courbe d'ajustement nominal, qui represente la composition gaseuse fonction du temps, qui consiste en la détermination de la composition gaseuse de l'atmosphère optimale à disposer en chaque instant dans l'intérieur de chacune desdites moyens de stockage, fonction du sorte de poisson conservé, du grade de fraîcheur du même, ça veut dire, du temps de stockage écoulé depuis la prise, et du temps estimée de conservation
d) Phase d'application d'une atmosphère initiale consistente en l'injection dans lesdits moyens de stockage, de préférence de la part inférieur du dit compartiment étanche, d'une composition gaseuse déterminé à partir du ditte courbe d'ajustement nominal, à très baisse pression, de préference entre 10 mbar et 100 mbar, se deplaçant l'atmosphère existente dans lesdits compartiments étanches, pour son conduction a l'extérieure.
e) Phase de control périodique du période T, consistente en la succession cyclique des etapes de mesure de la composition réelle dans chacun des moyens de stockage , comparaison avec la composition théorique ou nominale correspondant, et ajustement ou correction de la composition gaseuse dans le moyen de stockage corréspondant, consistente en l'ajustement de la composition gaseuse réelle à la composition gaseuse nominale, entendue comme cette composition que s'ajuste au courbe de composition théorique, ou courbe d'ajustement nominale;
f) Phase de rétablissement de l'atmosphère de la terre dans chacun des compartiments étanches, a réaliser entre de préference, 12 à 24 heures avant l'arrivée du bâteau de pêche au havre, consiste en l'injection d'aire à baisse pression, de préference entre 50 mbar et 100 mbar, et l'extraction de la composition gaseuse existente dans l'intériure du compartiment etanche.

2. Procédé de conservation de poisson frais au bord des navires de pêche basé en la application d'un atmosphère de composition variable, selon la premiere revendication **caracterisé en ce que** la phase de stockage comprend le stockage jointe, dans un même compartiment étanche, des espèces dont le mélange de gases et similaire, en grouppant ledites éspeces, de préferance, en poissons maigres, grasses, crustacés et mollusques.

3. Procédé de conservation de poisson frais au bord des navires de pêche basé dans la application d'un atmosphère de composition variable, selon la premiere revendication **caracterisé en ce que** la composition gaseuse qu'il faut injecter dans lesdites phases d'application d'atmosphère initiale et de control périodique consistente en un mélange que comprend de préference du dioxyde de carbon (CO₂), et/ou oxygéne (O₂), et/ou azote (N₂) pourrant le sustituer le cas écheant par un gas noble tel comme de préference argon (Ar).

4. Procédé de conservation de poisson frais au bord des navires de pêche basé dans la application d'un atmosphère de composition variable, selon la premiere revendication **caracterisé en ce que** la phase de rétablissement de l'atmosphère terrestre peut être réalisée en tout moment du période de stockage.

5. Procédé de conservation de poisson frais au bord des navires de pêche basé dans la application d'un atmosphère de composition variable, selon la premiere revendication **caracterisé en ce que** la courbe d'ajustement nominal pour des éspeces maigres avec un période de stockage prévu de jusqu'a 15 jours consiste de préference en ce que le premier et le deuxieme jour on ne introduit pas aucune atmosphère spécial, à partir du troisieme jour on commence un procéssus d'élévation progressive du dioxyde de carbone (CO₂), dés le contenu de l'atmosphère d'ambience jusqu'a de préference entre 35% et 45% le jour 10, et aussi d'oxigéne (O₂), dés le contenu de la atmosphère ambiant jusqu'a, de préference, entre 35% et 45% le jour 10, et à partir du jour 11 on maintien les valeurs obtenues, entre 35% et 45% dioxyde de carbone (CO₂), entre 35% et 45% oxygéne (O₂), et un complement au 100% de azote (N₂), toutes les valeurs indiquées étant pourcentages en volumen.

6. Procédé de conservation de poisson frais au bord des navires de pêche basé dans la application d'un atmosphère de composition variable, selon la premiere revendication **caracterisé en ce que** la courbe d'ajustement nominal pour des éspeces maigres avec un période de stockage prévu entre 15 et 30 jours, consiste de préference en ce que le premier et le deuxieme jour on n'introduit pa aucune àtmosphère spécial, à partir du troisieme jour on commence un processus d'élévation progressive du dioxyde de carbone (CO₂), dés le contenu de l'atmosphère ambiant jusqu'a de préference entre 35% et 45% le jour 11, se maintenant le pourcentage a partir de ça, et la cantité d'oxygène (O₂) se maintien constant dés le troisieme jour jusqu'au fin avec une concentration de, de préference, entre 15% et 25%, touts le valeurs donneés étant pourcentages en volume.

7. Procédé de conservation de poisson frais au bord des navires de pêche basé dans la application d'un atmosphère de composition variable, selon la premiere revendication **caracterisé en ce que** la courbe d'ajustement nominal pour des petites éspeces de poissons grasses, telles comme la sardine, le sourel et similaires consiste de préference en ce que la cantité d'oxygène (O₂) se maintien avec un contenu de preference d'entre 1% et 5%, dés quelques heures depuis la prise jusqu'au fin du période de stockage, et le contenu de dioxyde de carbone (CO₂) est augmenté uniformement dés, de préference, entre 15% et 25% le premier jour de stockage jusqu'au, de préference, entre 45% et 55% le cuatrieme jour de stockage, se maintenant le porcentage à partir de là, toutes les valeurs donneés étant pourcentages en volume.

8. Procédé de conservation de poisson frais au bord des navires de pêche basé dans la application d'un atmosphère de composition variable, selon la premiere revendication **caracterisé en ce que** la courbe d'ajustement nominal pour des grandes éspeces de poissons grasses, telles comme le thon et similaires consiste de préference en ce que la cantité d'oxygène (O₂) se maintien avec un contenu de preference d'entre 5% et 15%, dés quelques heures depuis la prise jusqu'au fin du période de stockage, et le contenu de dioxyde de carbone (CO₂) est augmenté uniformement dés, de préference, entre 15% et 25% le premier jour de stockage jusqu'au, de préference, entre 45% et 55% le cuatrieme jour de stockage, se maintenant le porcentage à partir de là, toutes les valeurs donneés étant pourcentages en volume.

9. Procédé de conservation de poisson frais au bord des navires de pêche basé dans la application d'un atmosphère de composition variable, selon la premiere revendication **caracterisé en ce que** la courbe d'ajustement nominal pour des crustacés consiste de préference en ce que la cantité d'oxygène (O₂) se maintien avec un contenu de preference d'entre 5% et 15%, et le contenu de dioxyde de carbone (CO₂) est augmenté uniformement dés, de préference, entre 5% et 15% le premier jour jusqu'au, de préference, entre 30% et 40% le cinquième jour de stockage, se maintenant le porcentage à partir de là, toutes les valeurs donneés étant pourcentages en volume.

10. Procédé de conservation de poisson frais au bord des navires de pêche basé dans la application d'un atmosphère de composition variable, selon la premiere revendication **caracterisé en ce que** la courbe d'ajustement nominal pour des mollusques consiste de préference en ce que la cantité d'oxygène (O₂) se maintien constant pendant tout le période de stockage avec une concentration de preference d'entre 10% et 20%, et le contenu de dioxyde de carbone (CO₂) est augmenté uniformement dés, de préference, entre 5% et 15% le premier jour jusqu'au, de préference, entre 45% et 55% le sixième jour de stockage, se maintenant le porcentage à partir de là, toutes les valeurs donneés étant pourcentages en volume.

11. Système pour la réalisation du procédé de conservation de poisson frais au bord des navires de pêche basé dans l'application d'un atmosphère de composition variable selon les revendications 1 à 10, **caracterisé en ce qu'il comprend:**
a) des moyens de stockage de poisson frais, consistentes de preference en une cale (1) compartimentée en des chambres étanches au gas (2.1, 2.2, ..., 2.N) qui disposent des moyens d'union aux membrures, barrots du pont, ponts, double fond, etc. du même, pour des bâteaux de coque d'aciere et aussi pour de bâteaux de coque de plastique renforcé avec du fibre de verre, et aussi des moyens d'accès consistentes en, de preference, des ports étanches au gas (4.1, 4.2, ..., 4.N) aptes à accumuler les poisson en vrac ou dans des caisses (3), containers ou similaires, de préference en plastique, qui disposent de preference des ouvertures.
b) des moyens de refroidissement des produits emmagasinés dans lesdits moyens de stockage, consistentes en, de preference, du glace mis en contact avec le produit et des serpentins de refroidissement disposés de préference dans le plafond de la cale (1);
c) un système de control et d'évaluation de la composition gaseuse réelle dans chacun desdits moyens de stockage et d'ajustement de ladite composition réelle au composition gaseuse théorique, consistente en, de préference, un automat programmable (6) apte à gouverner les moyens de mensure pour las détermination de la composition réelle du gas existent dans chacun desdits moyens de stockage, qui dispose des moyens de calcule et gard en mémoire pour la détermination de la composition nominale, théorique, et optimale du gas existent dans chacun desdits moyens de stockage, et moyens de prélèvement du gas existent dans chacun desdits moyens de stockage composé de préference d'un ensemble de soupapes de prélèvement (21.1, 21.2, ..., 21.N) télecommandés dudit automat programmable (6), et dún ensamble d'analisateurs (8a, 8b) aptes à déterminer la composition de chacun des prélèvements du gas prises;
d) un système d'injection consistente en, de preference, un système de tuyauteries apte à conduire médiante un poumon (16) une mélange des gases jusqu'au chacun desdits moyens de stockage a travers dudit réseau basé en un collecteur. De dite collecteur partent des branchements vers chacun desdits moyens de stockage, en disposant d'un soupape d'alimentation (17.1, 17.2, ..., 17.N) de control télecommandé gouverné pour ledit automat programmable (6) à l'entrée de chacun, avec des moyens de couplage placés de préference dans la part inférieure des mêmes, et un système d'extraction consistente en de preference un système de tuyauteries apte à conduire la mélange gaseuse déplacée de l'intérieur de chacun desdits moyens de stockage vers l'atmosphère extérieure, en disposant d'un système de séparation de l'atmosphère intérieure et extérieur formé de preference par une soupape de sortie (18.1, 18.2, ..., 18.N) télecommandé par le systeme de control ou par un système de fermeture liquide formé d'un siphon avec de l'eau pourvu d'un couvercle de verre de control visuel, avec des moyens hermetiques de couplage auxdits moyens de stockage placés de preference dans la part supérieure des mêmes.
e) Un système pour la réalisation de la mélange gaseuse qu'il faut injecter dans lesdits moyens de stockage, consistente en de preference des contrôleurs de masse (9a, 9b, 9c) gouvernés par le systèm de control qui dispose des soupapes de alimentation (11^{a}, 12^{a}, 13^{a}, 13b) aptes à introduire les gases qui formeront ladite composition gaseuse dans lesdits contrôleurs de masse (9a, 9b, 9c)

12. Système selon la revendication 11, caracterisé en ce que les cloisons desdits compartiments étanches au gas (2.1, 2.2,..., 2.N) se rencontrent avec les membrures et les barrots du pont du bâteau, de preference disposés aux deux flancs de la cale du bâteau, en laissant un couloir central, avec un compartiment central étanche au gas dans les extrèmes de proue.

13. Système selon la revindication 11, caracterisé en ce que le système de tuyauterie dispose d'un système d'asséchement de l'eau de fusion du glace et des liquides provenant du poisson, constituit de preference médiant une pompe de assèchement (19) avec des sopupapes d'assèchement (20.1, 20.2, ..., 20.N) télecommandées d'un unité de contrôl pour chacun des compartiments étanches (2.1, 2.2, ... 2.N), dont le start et l'arrêt de ladite pompe de asséchement, ainsi que l'ouverture et fermeture desdites sopupapes d'assèchement (20.1, 20.2, ... 20.N) est controlé dudit système de control.

14. Système selon la revendication 11, caracterisé en ce que les gases qu'on utilise pour la réalisation de la composition gaseuse se trouvent gardés dans des bouteilles.

15. Systèm selon la revendication 11, caracterisé en ce qu'il dispose d'un système d'obtention de gas tel comme de preference oxygène (O₂) et/ou azote (N₂) à partir de l'atmosphère, consistant à, de preference un compresseur d'air (12.1) et un génerateur (12.2) du gas correspondant, et un système d'accumulation dumême à baisse préssion, de préference entre 3,5 kg/cm2 et 4,5 kg/cm2, consistant à un poumon (12.3) du gas correspondant.

16. Systèm selon la revendication 11, **caracterisé en ce** qu'il dispose d'un systéme de securité qui se compose d'un système de ventilation forcé à être installé de preference dans les espaces fermés adjacents aux compartiments étanches, d'un système de vetilation avec des moyens de refroidissement de l'air tel comme de preference un batterie de refroidissement automatique à être installée de preference dans les couloirs de la cale, et d'un ensemble d'analisateurs de 1 'atmosphère avec d'alarme aptes à détecter les concentrations anormales que composent l'atmosphère de chacun des compartiments étanches.

17. Système selon la revendication 11, **caracterisé en ce que** le système de séparation de l'atmosphère intériure et extérieure et composé d'une soupape de décharge télecommandée par ledit système de control.

18. Système selon la revendication 11, **caracterisé en ce que** le système de séparation de l'atmosphère intériure et extérieure est composé d'un système de fermeture liquide formé d'un siphon avec de l'eau pourvu d'un couvercle de verre de control visuel, avec des moyens hermetiques de couplage auxdits moyens de stockage placés de preference dans la part supérieure des mêmes.
